# EUROPEAN PATENT APPLICATION

(11) **EP 3 858 126 A1**
(43) Date of publication of application: **04.08.2021**
(21) Application number: 19866922.8
(22) Date of filing: 17.07.2019
(51) Int. Cl.: A01C 7/06, B64D 1/16

(54) **MATERIAL BROADCAST SOWING DEVICE, UNMANNED AERIAL VEHICLE AND MATERIAL BROADCAST SOWING METHOD**

(30) Priority: 30.09.2018 CN 201811162341
(71) Applicant: Guangzhou Xaircraft Technology Co., Ltd., Tianhe District Guangzhou Guangdong 510000 (CN)
(72) Inventor: SU, Jiahao, Guangzhou, Guangdong 510000 (CN); LI, Shenghua, Guangzhou, Guangdong 510000 (CN)
(74) Representative: Papa, Elisabetta
(86) International application number: PCT/CN2019/096417
(87) International publication number: WO 2020/063057

(57) **Abstract**

Provided are a material broadcasting device, an unmanned aerial vehicle, and a material broadcasting method. The material broadcasting device comprises a material picker (1), a material receiver (2), a material feeder (3), and a controller (4). The material picker (1) comprises a housing (110) having an upper opening (1101) and a lower opening (1102); and a material picking wheel (18) located at the lower opening (1102) and driven by a driving member (15) to rotate. The upper opening (1101) is in communication with a material box. Material picking cavities (181) for accommodating materials are provided on the material picking wheel (18). The controller (4) is electrically connected to the driving member (15). The material receiver (2) is located below the material picking wheel (18) and is in communication with the material feeder (3). Materials in the material picking cavity (181) enter the material feeder (3) through the material receiver (2) to be broadcast. The material broadcasting method precisely controls material broadcasting in combination with flight status information about an unmanned aerial vehicle and preset broadcasting parameters, thereby improving the material broadcasting effect.

## Description

### CROSS-REFERENCE TO RELATED APPLICATION

The present application is based upon and claims priority to Chinese Patent Application No. 201811162341.3, filed on September 30, 2018, the entire content of which is incorporated herein by reference.

### TECHNICAL FIELD

The present application relates to the technical field of agricultural machinery, and more particularly, to a material broadcasting device, an unmanned aerial vehicle (UAV), and a material broadcasting method.

### BACKGROUND

With the development of agricultural machinery, agriculture has gradually achieved semi-automation or even full automation. The mechanical sowing in agricultural production may include hand-held mechanical sowing and walking mechanical sowing. For the hand-held mechanical sowing, workers need to carry sowing apparatuses when they go to the fields for sowing seeds. For the walking mechanical sowing, in the case of complex farmland terrains, there are many problems such as difficulty in going to the fields, low traveling speed, and difficulty in turning around.

As the flight technology of the small and medium-sized UAVs gradually becomes mature, UAVs have the advantages such as vertical takeoff and landing and being unaffected by terrains, making it possible for UAVs to sow seeds. Currently, most material broadcasting devices mounted on agricultural UAVs are of centrifugal turntable structures, achieving material picking and broadcasting through a centrifugal force of the centrifugal turntable. The centrifugal turntable structure has problems such as uneven broadcasting, and inability to accurately control the broadcast quantity. The existing material broadcasting method for UAVs only controls a rotation speed of the centrifugal turntable according to a preset quantity, and cannot achieve accurate control over the quantity of materials. Therefore, the current material broadcasting device and material broadcasting method have the problem that the broadcast quantity cannot be controlled accurately.

### SUMMARY

An objective of embodiments of the present disclosure is to provide a material broadcasting device, an unmanned aerial vehicle (UAV), and a material broadcasting method, so as to solve the problem that the broadcast quantity cannot be controlled accurately by the current material broadcasting device and the current material broadcasting method.

To this end, the embodiments of the present disclosure adopt the following technical solutions.

A material broadcasting device is provided, and includes: a material picker, a material receiver, a material feeder, and a controller. The material picker includes: a housing provided with an upper opening and a lower opening, the upper opening being in communication with a material box; and a material picking wheel located at the lower opening and driven to rotate by a driving member, the material picking wheel being provided with a material picking cavity thereon to accommodate materials. The controller is electrically connected with the driving member. The material receiver is located below the material picking wheel and is in communication with the material feeder. The materials in the material picking cavity enter the material feeder through the material receiver and are broadcast through the material feeder.

Optionally, the material picker includes: a disturbing member located at the upper opening of the housing and driven by the driving member.

Optionally, there are a plurality of disturbing members driven by one or more driving members.

Optionally, both sides of the lower opening are respectively provided with a material guiding plate and a material scraping strip, respectively, and the material guiding plate and the material scraping strip extend to a circumferential surface of the material picking wheel.

Optionally, a funnel-shaped flow guide frame is nested in the housing, and an end of the flow guide frame with a small opening faces the lower opening.

Optionally, a partition plate is arranged at the lower opening of the flow guide frame to divide the lower opening into a plurality of material picking outlets corresponding to material picking cavities.

Optionally, the material receiver includes a material receiving pipe, the material feeder includes a material receiving pipe, the material feeder includes a material feeding pipe, and one end of the material receiving pipe is located below the material picking wheel and arranged right opposite to the material picking cavity, while the other end of the material receiving pipe is in communication with the material feeding pipe.

Optionally, the material picking wheel is provided with at least one row of material picking cavities along an axial direction of the material picking wheel, and each row includes a same number of material picking cavities.

Optionally, the number of material receiving pipes and the number of material feeding pipes are equal to the number of material picking cavities in each row, and the material receiving pipes and the material feeding pipes are communicated in one-to-one correspondence.

Optionally, the material receiver further includes a material receiving tray, a funnel-shaped connection portion is arranged at a bottom of the material receiving tray, and the material receiving pipe is connected with the connection portion.

Optionally, a seal gasket is arranged between fitting surfaces of the material receiving tray and the housing.

Optionally, the material feeder further includes a fixing stand for fixing the material feeding pipe, and a blowing member electrically connected with the controller; the material feeding pipe is a three-way pipe provided with an air source inlet, a material inlet, and a material outlet; the material inlet is located between the air source inlet and the material outlet; the blowing member is arranged at the air source inlet; and the material feeding pipe is in communication with the material receiving pipe through the material inlet.

Optionally, an area of the air source inlet is larger than an area of the material outlet.

Optionally, the material feeder further includes a diverter, and the diverter is detachably connected to an end of the material feeding pipe provided with the material outlet.

Optionally, a cross section of an end of the diverter away from the material feeding pipe is elliptical.

Optionally, the diverter is a telescopic diverter.

Optionally, the material broadcasting device further includes a temperature sensor and/or a lighting device electrically connected with the controller.

An unmanned aerial vehicle is provided, including: an unmanned aerial vehicle body, a material box, a flight control module, and the material broadcasting device according to embodiments of the present disclosure. The material picker of the material broadcasting device is connected below the material box, the material feeder of the material broadcasting device is connected with the unmanned aerial vehicle body, and the controller is electrically connected with the flight control module.

A material broadcasting method is applied to the unmanned aerial vehicle according to embodiments of the present disclosure. The method includes: determining a target broadcast quantity according to pre-acquired flight status information and preset broadcasting parameters, when the unmanned aerial vehicle broadcasts the materials; determining a target rotation speed of the material picking wheel in the material broadcasting device of the unmanned aerial vehicle according to the target broadcast quantity; controlling the driving member of the material broadcasting device to drive the material picking wheel to rotate at the target rotation speed, to allow the material broadcasting device to broadcast the materials in the target broadcast quantity.

Optionally, the flight status information includes a real-time flight speed of the unmanned aerial vehicle; the preset broadcasting parameters include a preset flight speed and a preset broadcast quantity; and determining a target broadcast quantity according to pre-acquired flight status information and preset broadcasting parameters includes: determining the target broadcast quantity corresponding to the real-time flight speed, according to the preset flight speed, the preset broadcast quantity, and the real-time flight speed.

Optionally, when the material picker of the material broadcasting device includes a disturbing member and the material feeder includes a blowing member, the material broadcasting method further includes: controlling the driving member of the material broadcasting device to drive the disturbing member of the material broadcasting device to disturb; and controlling the blowing member of the material broadcasting device to provide high-speed airflow.

Optionally, the flight status information includes a real-time flight height, the preset broadcasting parameters include a broadcasting range, and the material broadcasting method further includes: determining a target broadcasting height of the material broadcasting device according to the broadcasting range; and adjusting the real-time flight height to the target broadcasting height.

Optionally, the material broadcasting method further includes: obtaining working state information of the material broadcasting device; and sending the working state information to the flight control module of the unmanned aerial vehicle, wherein the flight control module is configured to send the working state information to a ground station.

Optionally, the working state information includes at least one of battery information, working information of the driving member, communication connection status information, and working information of the blowing member.

Optionally, before the target broadcast quantity is determined according to the pre-acquired flight status information and the preset broadcasting parameters, the material broadcasting method includes: obtaining flight information of the unmanned aerial vehicle, the flight information including flight status information and current route information; judging whether a flight status of the unmanned aerial vehicle meets a preset broadcasting condition, according to the flight status information; if yes, controlling the material broadcasting device of the unmanned aerial vehicle to switch to an automatic broadcasting mode; judging whether a current broadcasting route is a preset broadcasting route according to the current broadcasting route information; if yes, obtaining the preset broadcasting parameters corresponding to the current broadcasting route.

Optionally, the unmanned aerial vehicle enters an automatic broadcasting mode after taking off, and the material broadcasting method further includes: judging whether a flight status of the unmanned aerial vehicle meets a preset broadcasting condition, according to the flight status information; if not, controlling the material broadcasting device of the unmanned aerial vehicle to exit the automatic broadcasting mode.

Optionally, the unmanned aerial vehicle enters an automatic broadcasting mode after taking off, the flight status information includes current route information, and the material broadcasting method further includes: judging whether a current route is a preset broadcasting route according to the current route information; if not, controlling the material broadcasting device of the unmanned aerial vehicle to stop broadcasting the materials.

The beneficial effects of the embodiments of the present disclosure are as follows.

The material broadcasting device according to the embodiments of the present disclosure includes the material picker, the material receiver, the material feeder and the controller, wherein the material picker includes the material picking wheel located at the lower opening, the material picking wheel is provided with the material picking cavity and driven by the driving member, and the controller is electrically connected with the driving member. For the material broadcasting device according to the embodiments of the present disclosure, during the material broadcasting, the controller controls the driving member to drive the material picking wheel to rotate at a corresponding speed, and the material picking wheel can pick up the materials accurately, which can solve a problem that current material broadcasting devices fail to accurately control the broadcast quantity, and can achieve the accurate control over the material broadcasting quantity of the UVA.

The material broadcasting method according to the embodiment of the present disclosure can determine the target broadcast quantity based on the flight status information obtained in advance and the preset broadcasting parameters, and then determine the target rotation speed of the material picking wheel based on the target broadcast quantity to drive the material picking wheel to pick up the materials for material broadcasting. Due to the combination of the flight status information of the UAV and the preset broadcasting parameters to control the broadcast quantity of the material broadcasting device, the broadcast quantity of the materials can be adjusted in real time in combination with the flight status information during the broadcasting process, thereby achieving the accurate control over the material broadcasting quantity, and improving the material broadcasting effect.

### BRIEF DESCRIPTION OF THE DRAWINGS

Embodiments of the present disclosure will be further described in detail according to the drawings.
Fig. 1 is a perspective view of a material broadcasting device according to an embodiment of the present disclosure.
Fig. 2 is a perspective view of a material picker according to an embodiment of the present disclosure.
Fig. 3 is sectional view of a material broadcasting device according to an embodiment of the present disclosure.
Fig. 4 is an exploded view of a material picker according to an embodiment of the present disclosure.
Fig. 5 is a perspective view of a material picking wheel according to an embodiment of the present disclosure.
Fig. 6 is a perspective view of a material receiver according to an embodiment of the present disclosure.
Fig. 7 is a perspective view of a material feeder according to an embodiment of the present disclosure.
Fig. 8 is a top view of a flow guide frame according to an embodiment of the present disclosure.
Fig. 9 is a structural view of a disturbing member according to an embodiment of the present disclosure.
Fig. 10 is a structural view of a disturbing member according to an embodiment of the present disclosure.
Fig. 11 is a structural view of another disturbing member according to an embodiment of the present disclosure.
Fig. 12 is a perspective view of a material feeding pipe according to an embodiment of the present disclosure.
Fig. 13 is a perspective view of a diverter according to an embodiment of the present disclosure.
Fig. 14 is a perspective view of another diverter according to an embodiment of the present disclosure.
Fig. 15 is a perspective view of a UAV according to an embodiment of the present disclosure.
Fig. 16 is a flow chart of a material broadcasting method according to an embodiment of the present disclosure.
Fig. 17 is a schematic view of a modular structural of a control system of a UAV according to an embodiment of the present disclosure.
Fig. 18 is a flow chart of another material broadcasting method according to an embodiment of the present disclosure.
Fig. 19 is a flow chart of yet another material broadcasting method according to an embodiment of the present disclosure.

### Reference numerals:

1-material picker; 110-housing; 1101-upper opening; 1102-lower opening; 11-disturbing member; 1111-rotating shaft; 1112-disturbing holder; 1113-disturbing body; 12-steering engine; 13-flow guide frame; 131-partition plate; 14-cover plate; 15-driving member; 16-first gear; 17-second gear; 18-material picking wheel; 181-material picking cavity; 182-bearing; 19-bearing seat; 112-material guiding plate; 113-material scraping strip; 2-material receiver; 21-seal gasket; 22-material receiving tray; 23-material receiving pipe; 3-material feeder; 31-blowing member; 32-fixing stand; 33-material feeding pipe; 331-air source inlet; 332-material inlet; 333-material outlet; 334-boss; 34-diverter; 341-diverter inlet; 342-diverter outlet; 343-slot; 344-warped edge; 35-temperature sensor; 36-lighting device; 4-controller; 10-UAV body; 20-material box.

### DETAILED DESCRIPTION

In order to make the technical problems to be solved, technical solutions to be adopted and technical effects to be achieved by the present disclosure clearer, the technical solutions of the embodiments of the present disclosure will be further described in detail below with reference to the accompanying drawings. Obviously, the described embodiments are merely a part of the embodiments of the present disclosure, and not all of the embodiments. Based on the embodiments of the present disclosure, all other embodiments obtained by those skilled in the related art without any creative work belong to the protection scope of the present disclosure.

In the description of the present disclosure, unless specified or limited otherwise, terms "connected," "coupled," "fixed" and the like should be understood broadly, and may be, for example, fixed connections, detachable connections, or integral connections; may also be mechanical or electrical connections; may also be direct connections or indirect connections via intervening structures; may also be inner communication or interaction of two elements, which can be understood in the present disclosure by those skilled in the art according to specific situations.

In the present disclosure, unless expressly specified and limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on," "above," or "on top of' a second feature may include an embodiment in which the first feature is right or obliquely "on," "above," or "on top of' the second feature, or just means that the first feature is at a height higher than that of the second feature; while a first feature "below," "under," or "on bottom of' a second feature may include an embodiment in which the first feature is right or obliquely "below," "under," or "on bottom of' the second feature, or just means that the first feature is at a height lower than that of the second feature.

Embodiment of the present disclosure provide a material broadcasting device attached to an unmanned aerial vehicle (UAV) to achieve material broadcasting, in which the material may be granular plant seeds, agricultural fertilizers, agricultural pesticides, and etc.

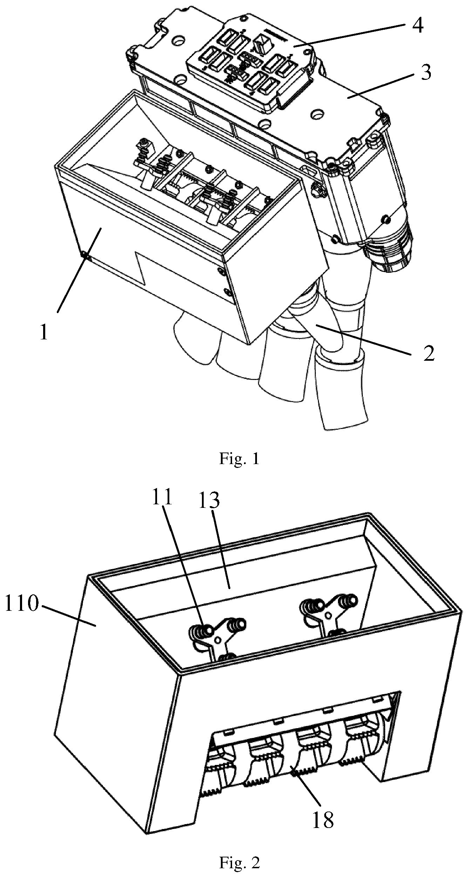

As illustrated in Fig. 1, the material broadcasting device according to an embodiment of the present disclosure includes a material picker 1, a material receiver 2, a material feeder 3, and a controller 4.

The material picker 1 may be a device that transfers materials according to a certain quantity from a material box for storing materials to the material receiver 2. The material receiver 2 may be a device that receives the materials from the material picker 1 and then transfers the materials to the material feeder 3. The material feeder 3 may be a device that accelerates the materials fed by the material receiver 2 and discharges the materials according to a certain broadcasting range to achieve the material broadcasting. The controller 4 may be a device for controlling electronics on the material broadcasting device.

As illustrated in Figs. 2-4, in an embodiment of the present disclosure, the material picker 1 includes a housing 110 and a material picking wheel 18. The housing 110 is provided with an upper opening 1101 and a lower opening 1102. The upper opening 1101 is in communication with the material box (not illustrated). The material picking wheel 18 is located at the lower opening 1102 and is driven to rotate by a driving member 15. The material picking wheel 18 is provided with a material picking cavity 181 thereon to accommodate the materials. The controller 4 is electrically connected to the driving member 15. The material receiver 2 is located below the material picking wheel 18 and is in communication with the material feeder 3. The materials in the material picking cavity 181 enter the material feeder 3 through the material receiver 2 and are broadcast by the material feeder 3.

Specifically, as illustrated in Figs. 2-4, the housing 110 of the material picker 1 is a square housing with upper and lower openings. A funnel-shaped flow guide frame 13 can be nested in the housing 110. One end of the flow guide frame 13 with a smaller opening forms the lower opening 1102, while the other end of the flow guide frame 13 with a larger opening is in communication with the material box and forms the upper opening 1101. Through the funnel-shaped flow guide frame 13, the materials can have good mobility and flow to the material picking wheel 18 more easily.

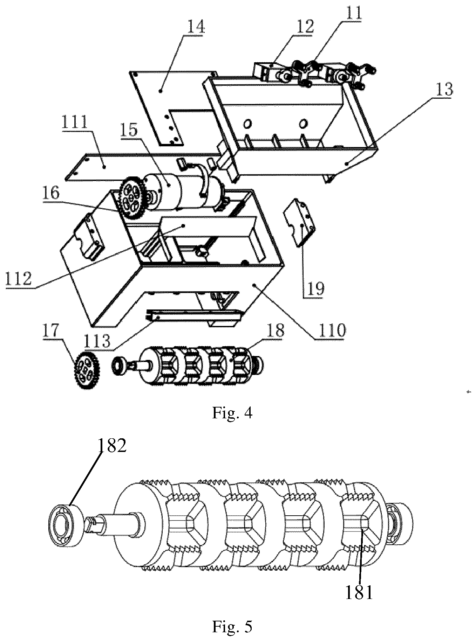

As illustrated in Fig. 4 and Fig. 5, a bearing seat 19 is arranged on two outer sides of the flow guide frame 13 and close to the lower opening 1102. The material picking wheel 18 is rotatably connected with the flow guide frame 13 by a bearing 182 and the bearing seat 19, and the material picking wheel 18 is located at the lower opening 1102. The housing 110 is provided with an accommodating chamber therein to accommodate the driving member 15, and the accommodating chamber is covered by a cover plate 14 to prevent dust from entering the driving member 15 and affecting the service life of the driving member 15. Optionally, the driving member 15 may be a motor, for example, a speed-adjustable servo motor. Preferably, the driving member 15 can drive the material picking wheel 18 to rotate by meshing of a first gear 16 and a second gear 17. In practical applications, the driving member 15 can also directly drive the material picking wheel 18 to rotate, or drive the material picking wheel 18 to rotate by means of a belt, a chain and other transmission modes.

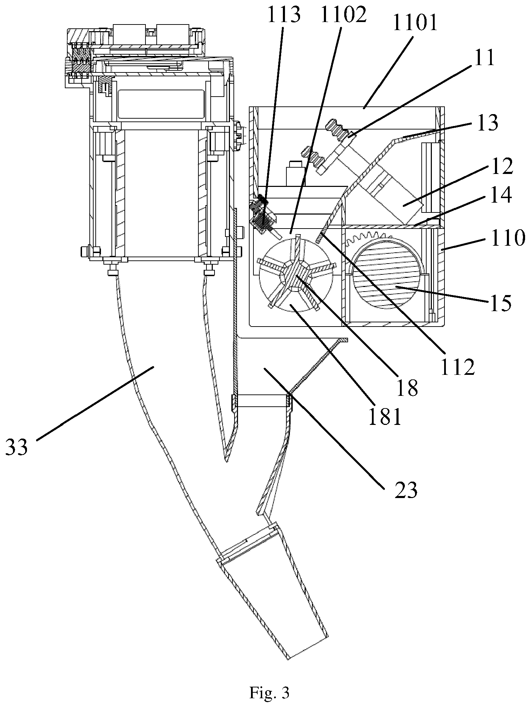

In a preferred embodiment of the present disclosure, as illustrated in Fig. 3 and Fig. 4, the material picker 1 includes a disturbing member 11. Specifically, the disturbing member 11 is located at the upper opening 1101 of the housing 110 and is driven by the driving member 15. For example, the driving member 15 can drive the disturbing member 11 to rotate by a transmission method such as a belt, a chain and the like to disturb the materials.

Optionally, as illustrated in Fig. 3, the disturbing member 11 may be driven by another driving member. For example, the material picker 1 may also be provided with a steering engine 12. Specifically, a side wall of the housing 110 and a side wall of the flow guide frame 13 form a mounting space, and the steering engine 12 is located in the mounting space and connected with the disturbing member 11 inside the flow guide frame 13 via a through hole in the side wall of the flow guide frame 13, so as to drive the disturbing member 11 to disturb the materials.

As illustrated in Fig. 4, the housing 110 is provided with a detachable door panel 111. After removing the door panel 111, a user may maintain the steering engine 12, the driving member 15 or other electronics within the housing 110.

The principle of picking up materials by the material broadcasting device according to the embodiments of the present disclosure is as follows:
When the material broadcasting device broadcasts the materials, the controller 4 controls the steering engine 12 to drive the disturbing member 11 to disturb the materials, such that the materials in the flow guide frame 13 flow to the lower opening 1102 under the effect of disturbance. Meanwhile, the controller 4 controls the driving member 15 to drive the material picking wheel 18 to rotate, and the material picking cavity 181 on the material picking wheel 18 picks up the materials. On the one hand, by the disturbance effect of the disturbing member 11, it is possible to avoid insufficient mobility caused by agglomeration or adulteration of the materials, which may result in a problem that the material picking cavity 181 cannot pick up materials or cannot pick up material in sufficient quantity; on the other hand, by controlling a rotation speed of the material picking wheel 18, the broadcast quantity of the materials can be controlled.

As illustrated in Fig. 3 and Fig. 4, in the preferred embodiment of the present disclosure, both sides of the lower opening 1102 are provided with a material guiding plate 112 and a material scraping strip 113 respectively, both of which extend to a circumferential surface of the material picking wheel 18. Specifically, the material guiding plate 112 may be a rubber mat, and the material guiding plate 112 may extend from the lower opening 1102 formed by the flow guide frame 13 to an arc surface of the material picking wheel 18. The material scraping strip 113 may be a brush that can extend from an inner side wall of the housing 110 close to the lower opening 1102 to the arc surface of the material picking wheel 18. By means of the material guiding plate 112 and the material scraping strip 113, on the one hand, the materials at the lower opening 1102 can fall above the material picking cavity 181 and be prevented from falling into the material receiver 2 through a gap between the lower opening 1102 and the material picking wheel 18; on the other hand, the material scraping strip 113 can block the materials that overflow from the material picking cavity 181, from falling into the material receiver 2, further improving the accuracy of picking up the materials.

As illustrated in Fig. 1 and Fig. 3, in an optional embodiment of the present disclosure, the material receiver 2 includes a material receiving pipe 23, and the material feeder 3 includes a material feeding pipe 33. One end of the material receiving pipe 23 is located below the material picking wheel 18 and arranged right opposite to the material picking cavity 181, and the other end thereof is in communication with the material feeding pipe 33. Through a relatively closed receiving passage and a feeding passage formed by the communication between the material receiving pipe 23 and the material feeding pipe 33, the inaccurate broadcast quantity of the materials caused by material splashing in the processes of receiving and feeding can be avoided, further improving the accuracy of the material broadcasting quantity.

As illustrated in Figs. 5-8, in a preferred embodiment of the present disclosure, the material picking wheel 18 is provided with at least one row of material picking cavities 181 along an axial direction, and each row includes the same number of material picking cavities 181. The number of material receiving pipes 23 and the number of material feeding pipes 33 are equal to the number of the material picking cavities 181 in each row, and the material receiving pipes 23 and the material feeding pipes 33 are communicated in one-to-one correspondence. Specifically, in an example that four material picking cavities 181 in each row are provided on the material picking wheel 18, the number of the material receiving pipes 23 and the number of the material feeding pipes 33 are both four, and the material receiving pipes 23 and the material feeding pipes 33 are communicated in one-to-one correspondence to form four independent receiving and feeding passages. By providing a plurality of the material picking cavities 181 and the corresponding material receiving pipes 23 and material feeding pipes 33, the broadcasting range and broadcasting efficiency of the materials can be improved.

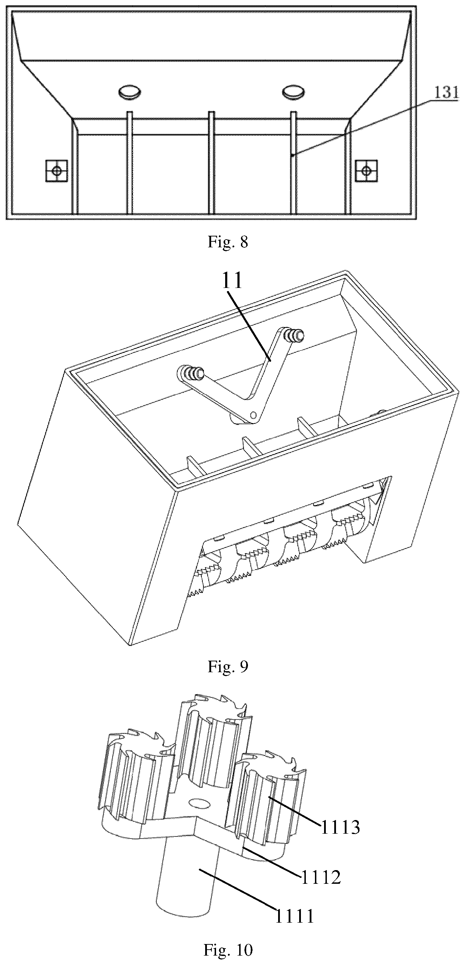

Accordingly, as illustrated in Fig. 8, a partition plate 131 is arranged at the lower opening 1102 of the flow guide frame 13 to divide the lower opening 1102 into a plurality of material picking outlets corresponding to the material picking cavities 181. By providing the partition plate 131, on the one hand, the materials can be evenly divided into each material picking cavity 181; on the other hand, the structural strength of the flow guide frame 13 can be enhanced.

As illustrated in Fig. 2 and Fig. 9, there may be one or more disturbing members 11 that can be driven by one or more steering engines 12. In practical applications, different numbers of disturbing members 11 can be arranged according to the size of the flow guide frame 13 to achieve an effect of disturbing the materials.

As illustrated in Fig. 10, in an optional embodiment of the present disclosure, the disturbing member 11 includes a rotating shaft 1111 and a disturbing holder 1112 connected with the rotating shaft 1111. There may be a plurality of disturbing holders 1112, and each disturbing holder 1112 is provided with a disturbing body 1113 thereon. The disturbing body 1113 may be fixedly or rotatably connected with the disturbing holder 1112. The disturbing body 1113 is a substantially cylindrical body, and a plurality of grooves are distributed on a circumferential surface of the cylindrical body in the same direction as an axis of the cylindrical body.

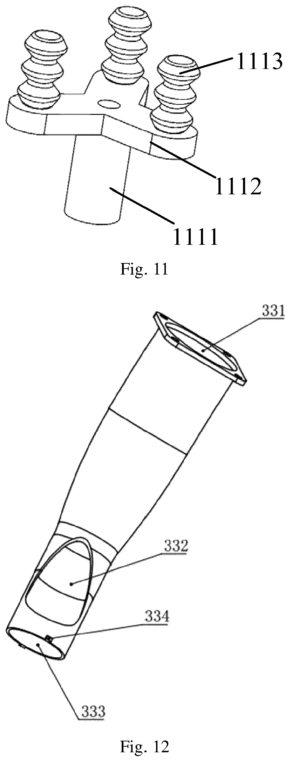

As illustrated in Fig. 11, in another optional embodiment, the disturbing body 1113 is a substantially cylindrical body, and a plurality of grooves can be distributed on the circumferential surface of the cylindrical body in a direction perpendicular to the axis of the cylindrical body, in which the grooves are connected smoothly.

In the embodiment of the present disclosure, the disturbing body 1113 is provided with grooves running in different directions, which can be applied to materials of various types or various sizes. In practical applications, different disturbing bodies 1113 can be replaced according to different materials, which can improve the versatility of the material broadcasting device.

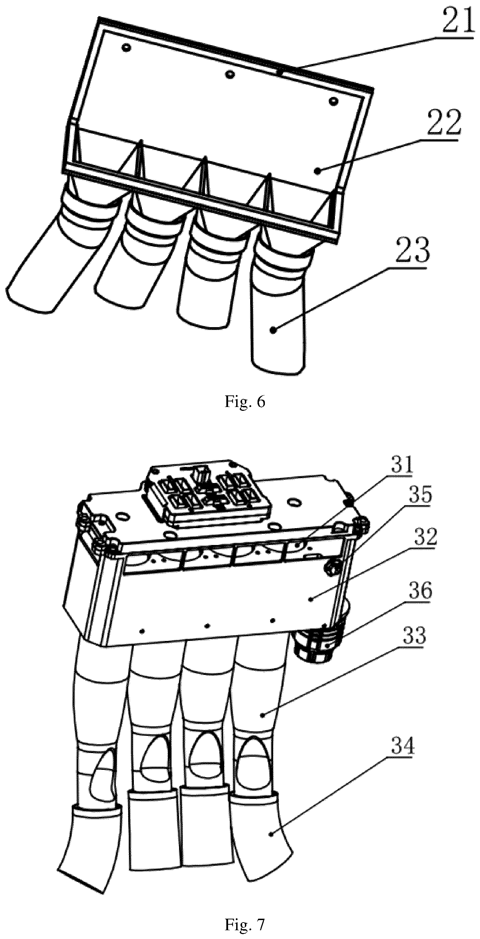

As illustrated in Fig. 6, in an optional embodiment of the present disclosure, the material receiver 2 also includes a material receiving tray 22. Preferably, a funnel-shaped connection portion is arranged at a bottom of the material receiving tray 22, the material receiving pipe 23 is connected with the connection portion, and the connection portion is located below the material picking cavity 181 and right opposite to the material picking cavity 181. By providing the material receiving tray 22 and the funnel-shaped connection portion, a material receiving range of the material receiving pipe 23 can be expanded, a problem of inaccurate broadcast quantity caused by missing the materials falling from the material picking cavity 181 can be avoided, and the accuracy of the material broadcasting quantity can be further improved.

Optionally, the material receiving tray 22 is provided with a seal gasket 21, and a gap between fitting surfaces of the material receiving tray 22 and the housing 110 can be sealed by the seal gasket 21, such that a closed material receiving space is formed between the material picker 1 and the material receiver 2, so as to prevent the material splashing from affecting the material broadcasting quantity, and further improve the accuracy of the material broadcasting quantity.

As illustrated in Fig. 7, in another optional embodiment of the present disclosure, the material feeder 3 includes a fixing stand 32 for fixing the material feeding pipes 33, and a blowing member 31 electrically connected with the controller 4.

Specifically, as illustrated in Fig. 12, the material feeding pipe 33 is a three-way pipe provided an air source inlet 331, a material inlet 332, and a material outlet 333. The material inlet 332 is located between the air source inlet 331 and the material outlet 333 and arranged close to the material outlet 333. The material feeding pipe 33 can be in communication with the material receiving pipe 23 through the material inlet 332. In practical applications, the blowing member 31 may be a fan or an air compressor. When the materials are broadcast, the controller 4 controls the blowing member 31 to provide high-speed airflow at the air source inlet 331, thus forming negative pressure at the material inlet 332, such that the materials in the material receiving pipe 23 are accelerated into the material feeding pipe 33, and the materials in the material feeding pipe 33 are discharged from the material outlet 333 under the acceleration of the high-speed airflow, achieving the material broadcasting. Through the arrangement of the blowing member 31 to provide the high-speed airflow, the speed of the materials entering the material feeding pipe 33 and the speed of the materials discharged from the material feeding pipe 33 can be increased, such that the materials can be broadcast with good directivity, avoiding the materials from being affected by the natural crosswinds or UAV rotor winds, and ensuring the broadcasting range of the materials.

As illustrated in Fig. 12, in a preferred embodiment of the present disclosure, an area of the air source inlet 331 is larger than an area of the material outlet 333. Compared with a situation where the area of the air source inlet 331 is smaller than or equal to the area of the material outlet 333, with the same air flow rate per unit of time, the material feeding pipe 33 according to the embodiment of the present disclosure can form the airflow with a higher flow speed. That is, by configuring the area of the air source inlet 331 to be larger than that of the material outlet 333, under the demand for the same air flow speed of the airflow, the power consumption of the blowing member 31 can be reduced, and the battery life of the UAV or the material broadcasting device can be improved.

As illustrated in Fig. 7, in a preferred embodiment of the present disclosure, the material feeder 3 also includes a diverter 34, and the diverter 34 is detachably connected to an end of the material feeding pipe 33 provided with the material outlet 333. Preferably, the material feeding pipe 33 and the diverter 34 are connected by a rotary hooked connection.

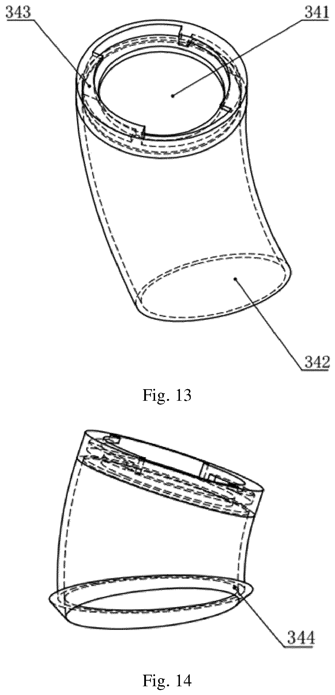

Specifically, as illustrated in Fig. 12 and Fig. 13, an outer circumferential surface of the material outlet 333 is provided with a boss 334, and a slot 343 adapted to the boss 334 is provided at a diverter inlet 341 of the diverter 34 connected with the material feeding pipe 33. The rotary hooked connection is formed by rotating the boss 334 into the slot 343. By arranging the diverter 34 detachably connected with the material feeding pipe 33, broadcasting angles of the materials can be adjusted according to different diverters 34, and the broadcasting range of the materials can be adjusted conveniently.

As illustrated in Fig. 13, in an optional embodiment of the present disclosure, a cross section of a diverter outlet 342 of the diverter 34 is elliptical, which can spread the materials to be broadcast in a fan shape, such that the materials broadcast on the ground can be distributed more evenly.

As illustrated in Fig. 14, in a preferred embodiment of the present disclosure, the diverter 34 is a telescopic diverter. Specifically, a warped edge 344 can be arranged on an outer circumference of the diverter outlet 342, and a telescopic tubular material can be fixed by the warped edge 344. When the diverter 34 needs to be lengthened, a length of the diverter 34 can be extended by the tubular material on the warped edge 344, so as to prolong the time for the blowing member 31 to accelerate the materials. Thus, the materials can be broadcast at a higher speed and with good wind resistance, which can improve the directivity of the material broadcasting, make the broadcasting range more stable, and allow the materials to be broadcast more evenly.

As illustrated in Fig. 7, in an optional embodiment of the present disclosure, the material broadcasting device also includes a temperature sensor 35 and/or a lighting device 36 electrically connected with the controller 4. Through the temperature sensor 35, the temperature within the material broadcasting device or in the broadcasting environment can be detected to adjust the material broadcasting device, and the lighting device 36 can make it convenient for the user to carry out night broadcasting operations.

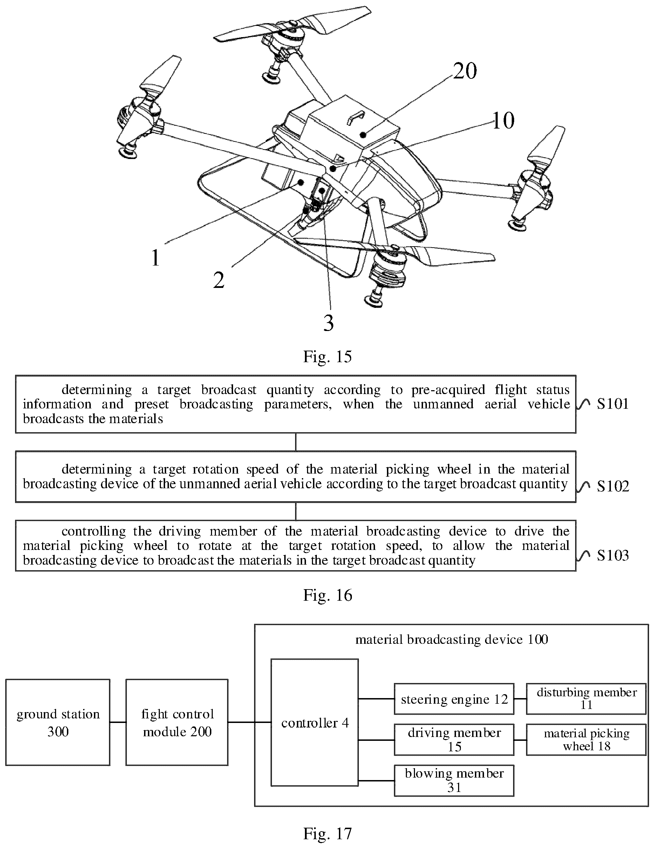

As illustrated in Fig. 15, an embodiment of the present disclosure provides a UAV, including a UAV body 10, a material box 20, a flight control module, and the material broadcasting device according to the embodiments of the present disclosure. The material picker 1 of the material broadcasting device is connected below the material box 20, the material feeder 3 of the material broadcasting device is connected to the UAV body 10, and the controller is electrically connected with the flight control module (not illustrated).

The UAV according to the embodiment of the present disclosure can adjust the quantity picked up by the material picker 1 in the material broadcasting device according to a real-time flight speed and a preset broadcast quantity, so as to achieve accurate control over the material broadcasting quantity. Meanwhile, a flight height can be adjusted in real time according to terrains and the broadcasting range can be adjusted by controlling a feeding speed of the material feeder 3, such that the materials can be broadcast more evenly.

As illustrated in Fig. 16 is a flow chart of a material broadcasting method according to an embodiment of the present disclosure, which is applied to a UAV. The material broadcasting method can specifically include the following steps.

S101, when the UAV broadcasts the materials, a target broadcast quantity is determined according to pre-acquired flight status information and preset broadcasting parameters.

In the embodiment of the present disclosure, the UAV can enter an automatic flight and material broadcasting mode after a default take-off self-check, or can determine whether to broadcast the materials after a self-check according to a flight status and a current route.

As illustrated in Fig. 17, the material broadcasting device 100 is provided with the controller 4, and provided with a driving member 15, a steering engine 12, and a blowing member 31 electrically connected with the controller 4. The steering engine 12 is configured to drive the disturbing member 22 of the material broadcasting device 100 to disturb the materials. The driving member 15 is configured to drive the material picking wheel 18 of the material broadcasting device 100 to rotate at a corresponding speed, so as to achieve the accurate control over the material broadcasting quantity. The blowing member 31 is configured to provide high-speed airflow for broadcasting.

A ground station 300 may be a device for controlling the UAV, such as a remote controller. The flight control module 200 is a main control module of the UAV and is configured to control flight speed, flight height, and flight attitude of the UAV. The material broadcasting device 100 is a device mounted on the UAV to achieve the material broadcasting. The controller 100 can communicate with the flight control module 200, for example by means of a CAN bus of the UAV or wireless communication.

In the embodiment of the present disclosure, surveying and mapping data about a broadcasting area can be obtained in advance or in real time, and the surveying and mapping data can include topographical information, longitude and latitude coordinates, calibrated waypoint information on the broadcasting area. A flight route can be automatically generated after the surveying and mapping data is imported into the ground station, and the flight route can be marked with a broadcasting route of the materials to be broadcast and preset broadcasting parameters corresponding to the broadcasting route.

The ground station sends the flight route to the flight control module, and the fight of the UAV is controlled by the flight control module. Therefore, the material broadcasting device can communicate with the flight control module to obtain the flight status information and the preset broadcasting parameters from the flight control module in real time. In practical applications, the current flight status of the UAV may be inconsistent with the flight status corresponding to the preset broadcasting parameters, so it is necessary to adjust the broadcast quantity according to the current flight status information and the preset broadcasting parameters, that is, to determine the target broadcast quantity.

S102, a target rotation speed of the material picking wheel in the material broadcasting device of the UAV is determined according to the target broadcast quantity.

In the embodiment of the present disclosure, the material broadcasting quantity can be controlled by the rotation speed of the material picking wheel in the material broadcasting device. Thus, the target rotation speed of the material picking wheel can be determined according to the target broadcast quantity. For example, the target rotation speed can be determined by the target broadcast quantity and the quantity of the materials picked up per revolution of the material picking wheel.

S103, the driving member of the material broadcasting device is controlled to drive the material picking wheel to rotate at the target rotation speed, such that the material broadcasting device broadcasts the materials in the target broadcast quantity.

In the embodiment of the present disclosure, the driving member may be a motor, such that by controlling a rotation speed of the motor, it is possible to realize a purpose of controlling the material picking wheel connected with the motor to rotate at the target rotation speed, so as to finally achieve the effect of accurately controlling the broadcast quantity.

The material broadcasting method according to the embodiment of the present disclosure can determine the target broadcast quantity based on the flight status information obtained in advance and the preset broadcasting parameters, and then determine the target rotation speed of the material picking wheel based on the target broadcast quantity to allow the material picking wheel to pick up the materials. Due to the combination of the flight status information of the UAV and the preset broadcasting parameters to control the broadcast quantity of the material broadcasting device, the broadcast quantity of the materials can be adjusted in real time in combination with the flight status information during the broadcasting process, thereby achieving the accurate control over the material broadcasting quantity, and improving the material broadcasting effect.

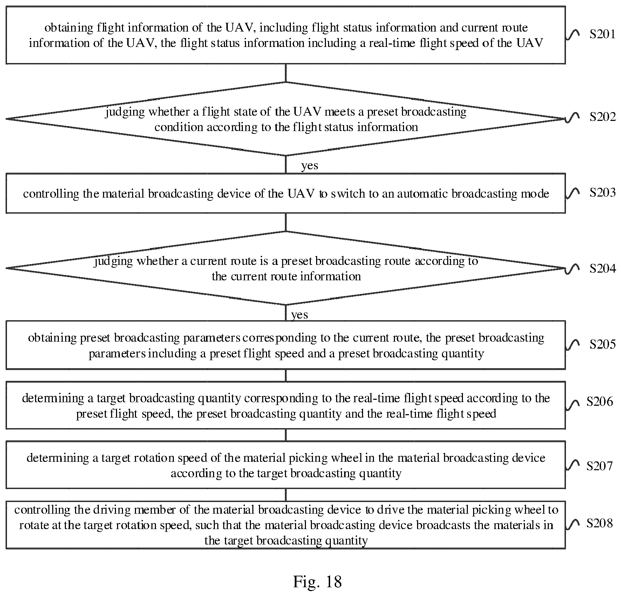

Fig. 18 shows a flow chart of a material broadcasting method according to another embodiment of the present disclosure, which is applied to the UAV. The material broadcasting method can specifically include the following steps.

S201, flight information of the UAV is obtained and includes flight status information and current route information of the UAV, and the flight status information includes a real-time flight speed of the UAV.

In the embodiment of the present disclosure, the ground station automatically generates a flight route according to the surveying and mapping data, and the flight route can be marked with a broadcasting route of the materials to be broadcast and broadcasting parameters corresponding to the broadcasting route.

The ground station sends the flight route to the flight control module, and the UAV is controlled by the flight control module to fly according to the flight route. Therefore, the controller of the material broadcasting device can obtain the flight route, the current flight status information of the UAV and the current route information from the flight control module. The flight status information includes the real-time flight speed of the UAV.

S202, it is judged whether a flight status of the UAV meets a preset broadcasting condition, according to the flight status information.

The flight status information (such as a flight speed change rate and a flight height change rate) can measure whether the UAV is in a stable state. The flight status information can be used to judge whether the current flight status of the UAV will affect the material broadcasting effect. For example, it can be judged whether the flight speed change rate and the flight height change rate are less than preset values, and if so, the material broadcasting effect will not be affected, and then step S203 can be performed.

S203, the material broadcasting device of the UAV is controlled to switch to an automatic broadcasting mode.

If the flight status of the UAV meets the preset broadcasting condition, the material broadcasting device on the UAV is controlled to switch to the automatic broadcasting mode. In the embodiment of the present disclosure, the automatic broadcasting mode may be a mode in which the material broadcasting device enters a standby state after a self-check.

S204, it is judged whether a current route is a preset broadcasting route according to the current route information.

In the embodiment of the present disclosure, the flight control module of the UAV can receive a pre-planned flight route from the ground station and then perform a flight mission. The flight route is marked with a route along which the materials need to be broadcast, i.e., the preset broadcasting route. It can be judged whether the current route is the preset broadcasting route may be judged, and if yes, it indicates that the current route is the route along which the materials need to be broadcast, and then step S205 can be performed.

S205, preset broadcasting parameters corresponding to the current route are obtained, and the preset broadcasting parameters include a preset flight speed and a preset broadcast quantity.

If the current route is the preset broadcasting route, the broadcasting parameters corresponding to the preset broadcasting route can be obtained from the flight control module, and the broadcasting parameters include the preset flight speed and the preset broadcast quantity.

S206, a target broadcast quantity corresponding to the real-time flight speed is determined according to the preset flight speed, the preset broadcast quantity, and the real-time flight speed.

In practical applications, the UAV may be affected by natural winds during the flight, and the real-time flight speed may be different from the preset flight speed. Thus, the target broadcast quantity corresponding to the real-time flight speed can be determined according to the preset flight speed, the preset broadcast quantity, and the real-time flight speed.

For example, when the preset flight speed is 5 m/s, the preset broadcast quantity is 500 g/s, and the real-time flight speed is 10 m/s, the target broadcast quantity should be 1000 g/s in order to achieve the same effect as the situation where the materials are broadcast at the preset flight speed of 5m/s and in the preset broadcast quantity of 500g/s.

S207, a target rotation speed of the material picking wheel in the material broadcasting device is determined according to the target broadcast quantity.

In the embodiment of the present disclosure, in the material broadcasting device, the material broadcasting quantity can be controlled by a rotation speed of the material picking wheel. Thus, the target rotation speed of the material picking wheel can be determined according to the target broadcast quantity. For example, the target rotation speed can be determined by the target broadcast quantity and the quantity of the materials picked up per revolution of the material picking wheel.

S208, the driving member of the material broadcasting device is controlled to drive the material picking wheel to rotate at the target rotation speed, such that the material broadcasting device broadcasts the materials in the target broadcast quantity.

In the embodiment of the present disclosure, the driving member may be a motor, such that by controlling a rotation speed of the motor, it is possible to realize a purpose of controlling the material picking wheel connected with the motor to rotate at the target rotation speed, so as to finally achieve the effect of accurately controlling the broadcast quantity.

In the embodiment of the present disclosure, when the materials are broadcast, the steering engine of the material broadcasting device can be controlled to drive the disturbing member to disturb, and the blowing member of the material broadcasting device can be controlled to provide high-speed airflow.

In practical applications, it can be determined whether the disturbing member and the blowing member need to be started, according to the type of the materials, the broadcasting environment and the like. For example, if the material fluidity is good, there is no crosswind influence during broadcasting, and a single material mass is relatively large, the disturbing member and the blowing member may not be started, thereby reducing the total power consumption of the material broadcasting device, and improving the endurance of the UAV.

If the fluidity of the materials is poor, the broadcasting is affected by crosswinds, and the single material mass is relatively small, the disturbing member and the blowing member may be started, so as to improve the material picking accuracy and ensure the broadcasting range.

In the embodiment of the present disclosure, the target broadcast quantity corresponding to the real-time flight speed can be determined according to the preset flight speed, the preset broadcast quantity, and the real-time flight speed, and the material picking wheel can be driven by the driving member to rotate at a corresponding rotation speed according to the target broadcast quantity to pick up the materials. On the one hand, the broadcast quantity can be adjusted in real time and accurately controlled; on the other hand, it is possible to avoid a problem that frequent adjustment of an output of an electronic speed regulator caused by adjusting the flight speed to match the preset broadcast quantity reduces the service life of the electronic speed regulator.

Furthermore, it can be judged whether to enter the automatic broadcasting mode, according to the flight status information, and after entering the preset broadcasting route, the material broadcasting device can be controlled to perform a material broadcasting operation according to the flight status information and the preset broadcasting parameters, so as to achieve automatic flight and automatic broadcasting of the UAV without manual intervention.

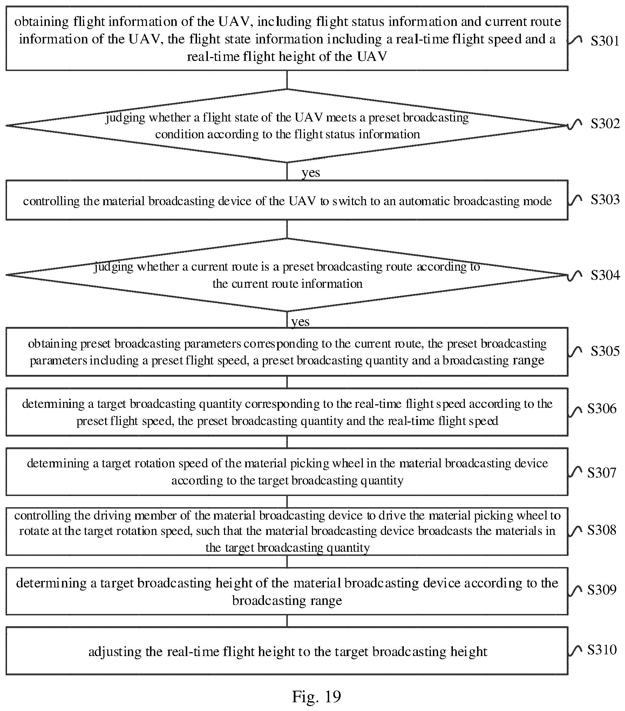

Fig. 19 illustrates a flow chart of a material broadcasting method according to yet another embodiment of the present disclosure, which is applied to the UAV. The material broadcasting method can specifically include the following steps.

S301, flight information of the UAV is obtained and includes flight status information and current route information of the UAV, and the flight status information includes a real-time flight speed of the UAV.

S302, it is judged whether the flight status of the UAV meets a preset broadcasting condition, according to the flight status information; if yes, step S303 is performed.

S303, the material broadcasting device of the UAV is controlled to switch to an automatic broadcasting mode.

S304, it is judged whether a current route is a preset broadcasting route according to the current route information, if yes, step S305 is performed.

S305, preset broadcasting parameters corresponding to the current route are obtained, and the preset broadcasting parameters include a preset flight speed, a preset broadcast quantity, and a broadcasting range.

S306, a target broadcast quantity corresponding to the real-time flight speed is determined according to the preset flight speed, the preset broadcast quantity, and the real-time flight speed.

S307, a target rotation speed of the material picking wheel in the material broadcasting device is determined according to the target broadcast quantity.

S308, the driving member of the material broadcasting device is controlled to drive the material picking wheel to rotate at the target rotation speed, such that the material broadcasting device broadcasts the materials in the target broadcast quantity.

S309, a target broadcasting height of the material broadcasting device is determined according to the broadcasting range.

In the embodiment of the present disclosure, in the material feeder of the material broadcasting device, under the condition that an angle of the diverter remains unchanged, the broadcasting range can be determined when a height of the diverter to the ground is determined. In practical applications, the target broadcasting height corresponding to the broadcasting range can be determined according to a preset correspondence between the broadcasting range and the height.

S310, a real-time flight height is adjusted to the target broadcasting height.

After the target broadcasting height is determined, the flight control module of the UAV can control a rotor of the UAV to adjust the real-time flight height of the UAV to the target broadcasting height.

The embodiment of the present disclosure can adjust the flight height of the UAV in real time, such that the materials can be broadcast in a preset broadcasting range. On the one hand, a problem that the materials are re-broadcast or missed can be avoided, such that the materials are broadcast more evenly; on the other hand, the difficulty of route planning can be reduced, since it is possible to avoid a problem of planning the route to compensate for the need of re-broadcasting the materials due to unstable broadcasting range.

In an optional embodiment of the present disclosure, the material broadcasting method can also include: obtaining working state information of the material broadcasting device; and sending the working state information to the flight control module of the UAV, in which the flight control module is configured to send the working state information to the ground station.

Specifically, the working state information can include at least one of battery information, working information of the driving member, communication connection status information, and working information of the blowing member. The battery information may be battery information of the material broadcasting device or battery information of the UAV, and the battery information may be information such as battery voltage, remaining battery power, battery temperature and the like. The working information of the driving member may be working current of the driving member. The connection status information may be information on whether the wireless connection is successful or fails, for example. The working information of the blowing member may be the rotation speed of the blowing member or the air flow rate. After being obtained, the working state information is sent to the ground station through the flight control module. The user can know a working state of the material broadcasting device and loads of various devices through the ground station, so as to make corresponding adjustments.

In an optional embodiment of the present disclosure, the UAV enters the automatic broadcasting mode after taking off, and the material broadcasting method also includes: judging whether the flight status of the UAV meets the preset broadcasting condition according to the flight status information; if not, controlling the material broadcasting device of the UAV to exit the automatic broadcasting mode.

Specifically, after taking off, the UAV will automatically enter a broadcasting mode by default. During the material broadcasting, the flight status of the UAV is affected by the environment or the UAV's own devices. For example, when the natural wind is too strong and affects the flight stability of the UAV, or when the battery power of the UAV is insufficient, the material broadcasting device of the UAV can be controlled to exit the automatic broadcasting mode, and wait to re-enter the automatic broadcasting mode until the preset broadcasting condition is satisfied. Whether the material broadcasting device enters the automatic broadcasting mode can be determined according to the flight status in real time, so as to avoid a problem that the flight instability of the UAV affects the broadcasting effect.

In an optional embodiment of the present disclosure, the UAV enters the automatic broadcasting mode after taking off. The flight status information includes the current route information. The material broadcasting method also includes: judging whether the current route is the preset broadcasting route according to the current route information; if not, controlling the material broadcasting device of the UAV to stop broadcasting the materials.

In practical applications, the UAV enters the automatic broadcasting mode by default after taking off. During the material broadcasting, the UAV flies according to a pre-planned flight course. The flight course includes a broadcasting route and a non-broadcasting route. For example, the non-broadcasting route may be a route segment corresponding to turns, U-turns, obstacles and the like. If the UAV flies from the broadcasting route to the non-broadcasting route, the material broadcasting device can be controlled to stop performing the material broadcasting operation, so as to avoid a problem of material waste caused by material broadcasting at turns, U-turns and obstacles.

In the descriptions of the present disclosure, it is to be understood that, terms such as "upper," "lower," "right" and the like should be construed to refer to the orientation or position relationship as illustrated in the drawings. These terms are for convenience of description and simplified operation, and do not indicate or imply that the device or element referred to must have a particular orientation, or be constructed and operated in a particular orientation. Thus, these terms shall not be construed as limitation on the present disclosure. In addition, terms such as "first" and "second" are only used for distinguishing in description, and have no special meaning.

Reference throughout this specification to terms "an embodiment," "an example", and the like means that a particular feature, structure, material, or characteristic described in connection with the embodiment or example is included in at least one embodiment or example of the present disclosure. In this specification, the appearances of the phrases are not necessarily referring to the same embodiment or example.

In addition, it should be understood that although the specification is described according to the embodiments, not every embodiment only contains one independent technical solution. The description of the specification is merely for clarifying the devices. Those skilled in the art should consider the specification as a whole, and the technical solutions in various embodiments may be appropriately combined to form other embodiments that can be appreciated by those skilled in the art.

The technical principles of the present disclosure are described above in combination with specific embodiments. The description is merely for explaining the principles of the present disclosure, and cannot be construed as limitation on the protection scope of the present disclosure. Based on the explanation herein, those skilled in the art can easily envisage other specific embodiments of the present disclosure without any creative effort, and these embodiments also fall into the protection scope of the present disclosure.

## Claims

1. A material broadcasting device, comprising:
a material picker, comprising:
a housing provided with an upper opening and a lower opening, the upper opening being in communication with a material box; and
a material picking wheel located at the lower opening and driven to rotate by a driving member, the material picking wheel being provided with a material picking cavity thereon to accommodate materials;
a controller electrically connected with the driving member;
a material feeder; and
a material receiver located below the material picking wheel and in communication with the material feeder, wherein the materials in the material picking cavity enter the material feeder through the material receiver and are broadcast through the material feeder.

2. The material broadcasting device according to claim 1, wherein the material picker comprises: a disturbing member located at the upper opening of the housing and driven by the driving member.

3. The material broadcasting device according to claim 2, wherein a plurality of disturbing members are provided and driven by one or more driving members.

4. The material broadcasting device according to any one of claims 1-3, wherein both sides of the lower opening are respectively provided with a material guiding plate and a material scraping strip, respectively, and the material guiding plate and the material scraping strip extend to a circumferential surface of the material picking wheel.

5. The material broadcasting device according to any one of claims 1-4, wherein a funnel-shaped flow guide frame is nested in the housing, and an end of the flow guide frame with a small opening faces the lower opening.

6. The material broadcasting device according to claim 5, wherein a partition plate is arranged at the lower opening of the flow guide frame to divide the lower opening into a plurality of material picking outlets corresponding to the material picking cavities.

7. The material broadcasting device according to any one of claims 1-6, wherein the material receiver comprises a material receiving pipe, the material feeder comprises a material feeding pipe, and one end of the material receiving pipe is located below the material picking wheel and arranged right opposite to the material picking cavity, while the other end of the material receiving pipe is in communication with the material feeding pipe.

8. The material broadcasting device according to claim 7, wherein the material picking wheel is provided with at least one row of the material picking cavities along an axial direction of the material picking wheel, and each row comprises a same number of the material picking cavities.

9. The material broadcasting device according to claim 8, wherein the number of the material receiving pipes and the number of the material feeding pipes are equal to the number of the material picking cavities in each row, and the material receiving pipes and the material feeding pipes are communicated in one-to-one correspondence.

10. The material broadcasting device according to any one of claims 7-9, wherein the material receiver further comprises a material receiving tray, a funnel-shaped connection portion is arranged at a bottom of the material receiving tray, and the material receiving pipe is connected with the connection portion.

11. The material broadcasting device according to claim 10, wherein a seal gasket is arranged between fitting surfaces of the material receiving tray and the housing.

12. The material broadcasting device according to any one of claims 7-9, wherein the material feeder further comprises a fixing stand for fixing the material feeding pipe, and a blowing member electrically connected with the controller;
the material feeding pipe is a three-way pipe provided with an air source inlet, a material inlet, and a material outlet; the material inlet is located between the air source inlet and the material outlet; the blowing member is arranged at the air source inlet; and the material feeding pipe is in communication with the material receiving pipe through the material inlet.

13. The material broadcasting device according to claim 12, wherein an area of the air source inlet is larger than an area of the material outlet.

14. The material broadcasting device according to claim 12, wherein the material feeder further comprises a diverter, and the diverter is detachably connected to an end of the material feeding pipe provided with the material outlet.

15. The material broadcasting device according to claim 14, wherein a cross section of an end of the diverter away from the material feeding pipe is elliptical.

16. The material broadcasting device according to claim 14 or 15, wherein the diverter is a telescopic diverter.

17. The material broadcasting device according to any one of claims 1-16, further comprising a temperature sensor and/or a lighting device electrically connected with the controller.

18. An unmanned aerial vehicle, comprising: an unmanned aerial vehicle body, a material box, a flight control module, and the material broadcasting device according to any one of claims 1-17, wherein the material picker of the material broadcasting device is connected below the material box, the material feeder of the material broadcasting device is connected with the unmanned aerial vehicle body, and the controller is electrically connected with the flight control module.

19. A material broadcasting method, applied to the unmanned aerial vehicle according to claim 18, wherein the method comprises:
determining a target broadcast quantity according to pre-acquired flight status information and preset broadcasting parameters, when the unmanned aerial vehicle broadcasts the materials;
determining a target rotation speed of the material picking wheel in the material broadcasting device of the unmanned aerial vehicle according to the target broadcast quantity;
controlling the driving member of the material broadcasting device to drive the material picking wheel to rotate at the target rotation speed, to allow the material broadcasting device to broadcast the materials in the target broadcast quantity.

20. The material broadcasting method according to claim 19, wherein the flight status information comprises a real-time flight speed of the unmanned aerial vehicle; the preset broadcasting parameters comprise a preset flight speed and a preset broadcast quantity; and
determining a target broadcast quantity according to pre-acquired flight status information and preset broadcasting parameters comprises:
determining the target broadcast quantity corresponding to the real-time flight speed, according to the preset flight speed, the preset broadcast quantity, and the real-time flight speed.

21. The material broadcasting method according to any one of claims 19-20, wherein when the material picker of the material broadcasting device comprises a disturbing member and the material feeder comprises a blowing member, the material broadcasting method further comprises:
controlling the driving member of the material broadcasting device to drive the disturbing member of the material broadcasting device to disturb; and
controlling the blowing member of the material broadcasting device to provide high-speed airflow.

22. The material broadcasting method according to any one of claims 19-21, wherein the flight status information comprises a real-time flight height, the preset broadcasting parameters comprise a broadcasting range, and the material broadcasting method further comprises:
determining a target broadcasting height of the material broadcasting device according to the broadcasting range; and
adjusting the real-time flight height to the target broadcasting height.

23. The material broadcasting method according to any one of claims 19-22, further comprising:
obtaining working state information of the material broadcasting device; and
sending the working state information to the flight control module of the unmanned aerial vehicle, wherein the flight control module is configured to send the working state information to a ground station.

24. The material broadcasting method according to claim 23, wherein the working state information comprises at least one of battery information, working information of the driving member, communication connection status information, and working information of the blowing member.

25. The material broadcasting method according to any one of claims 19-24, wherein before the target broadcast quantity is determined according to the pre-acquired flight status information and the preset broadcasting parameters, the material broadcasting method comprises:
obtaining flight information of the unmanned aerial vehicle, the flight information comprising flight status information and current route information;
judging whether a flight status of the unmanned aerial vehicle meets a preset broadcasting condition, according to the flight status information;
if yes, controlling the material broadcasting device of the unmanned aerial vehicle to switch to an automatic broadcasting mode;
judging whether a current broadcasting route is a preset broadcasting route according to the current broadcasting route information;
if yes, obtaining the preset broadcasting parameters corresponding to the current broadcasting route.

26. The material broadcasting method according to any one of claims 19-24, wherein the unmanned aerial vehicle enters an automatic broadcasting mode after taking off, and the material broadcasting method further comprises:
judging whether a flight status of the unmanned aerial vehicle meets a preset broadcasting condition, according to the flight status information;
if not, controlling the material broadcasting device of the unmanned aerial vehicle to exit the automatic broadcasting mode.

27. The material broadcasting method according to any one of claims 19-24, wherein the unmanned aerial vehicle enters an automatic broadcasting mode after taking off, the flight status information comprises current route information, and the material broadcasting method further comprises:
judging whether a current route is a preset broadcasting route according to the current route information;
if not, controlling the material broadcasting device of the unmanned aerial vehicle to stop broadcasting the materials.
